# EUROPEAN PATENT SPECIFICATION

(11) **EP 3 006 857 B1**
(45) Date of publication and mention of the grant of the patent: **22.11.2017**
(21) Application number: 15188973.0
(22) Date of filing: 08.10.2015
(51) Int. Cl.: F25B 13/00, F25B 21/02, F25B 25/02, F25B 30/02, F25B 39/02, F24H 4/02, F24H 4/04, F24H 9/20, F24D 3/18, F24D 17/02

(54) **HEAT-PUMP HEAT SOURCE APPARATUS**
WÄRMEPUMPEWÄRMEQUELLENVORRICHTUNG
APPAREIL DE SOURCE THERMIQUE À POMPE À CHALEUR

(30) Priority: 09.10.2014 JP 2014207773
(43) Date of publication of application: 13.04.2016
(73) Proprietor: Toshiba Carrier Corporation, Kawasaki-shi, Kanagawa 212-8585 (JP)
(72) Inventor: IMATO, Naoki, Shizuoka-ken, 416-8521 (JP); WATANABE, Yoshinori, Shizuoka-ken, 416-8521 (JP); OKAMOTO, Takahiro, Shizuoka-ken, 416-8521 (JP)
(74) Representative: Rehmann, Thorsten

(56) References cited:
- EP-A1- 2 330 359

## Description

### FIELD

Embodiments described herein generally relate to a heat-pump heat source apparatus which includes a heatpump refrigerating cycle and obtains hot water used for space heating and hot water supply by execution of the heat-pump refrigerating cycle.

### BACKGROUND

EP 2 330 359 A1 discloses a heat-pump heat source apparatus comprising one outdoor fan configured pursuant outdoor air to the heat-pump refrigerating cycle, an outdoor-air temperature sensor detecting a temperature of the outdoor air drawn in by the outdoor fan, and a controller configured to control operation of the heat-pump refrigerating cycle according to the temperature detected by the outdoor-air-temperature sensor and of course the outdoor fan appropriate in advance before the heat-pump refrigerating cycle begins to operate.
There is known a heat-pump heat source apparatus which includes a heat-pump refrigerating cycle, extracts heat from the outdoor air by executing the heat-pump refrigerating cycle, and sends hot water having been heated with the extracted heat to a space 15 heating unit and a hot water supply tank (PATENT LITERATURE: JP 2006-258340 A).
A heat-pump refrigerating cycle may be implemented by a compressor, a water heat exchanger, a pressure reducing unit, and an air heat exchanger. Water 20 flowing through the water heat exchanger is heated by a refrigerant discharged from the compressor.

In a heat-pump heat source apparatus, an outdoor air-temperature sensor is arranged at the outdoor unit in which a compressor and an air heat exchanger are 25 accommodated. Execution of the heat-pump refrigerating cycle is controlled according to an outdoor temperature detected by the outdoor-air-temperature sensor.

However, the outdoor-air-temperature sensor of the outdoor unit may indicate a value which is different 30 from an actual value because of the adverse effect of direct sunlight etc. When operation is controlled under the erroneous detection, the operation will be inefficient. The energy-saving performance expected to be obtained by adoption of a heat-pump refrigerating cycle may not be achieved.

### BRIEF DESCRIPTION OF THE DRAWINGS

FIG. 1 is a block diagram illustrating the configuration of one embodiment.
FIG. 2 is a view illustrating the appearance of an outdoor unit in the embodiment.
FIG. 3 is a flow chart illustrating how the controller in the embodiment controls.
FIG. 4 is a view illustrating the operation control requirements of the embodiment.

### DETAILED DESCRIPTION

A heat-pump heat source apparatus in one embodiment generally includes:
a heat-pump refrigerating cycle configured to heat water;
at least one outdoor fan (7a) configured to send outdoor air to the heat-pump refrigerating cycle;
an outdoor-air-temperature sensor (31) detecting a temperature (To) of the outdoor air drawn in by the outdoor fan (7a); and
a controller (40) configured to control operation of the heat-pump refrigerating cycle according to the temperature (To) detected by the outdoor-air-temperature sensor (31) and to cause the outdoor fan (7a) to operate in advance before the heat-pump refrigerating cycle begins to operate.

### (1) Hereafter, one embodiment will be described with reference to the drawings.

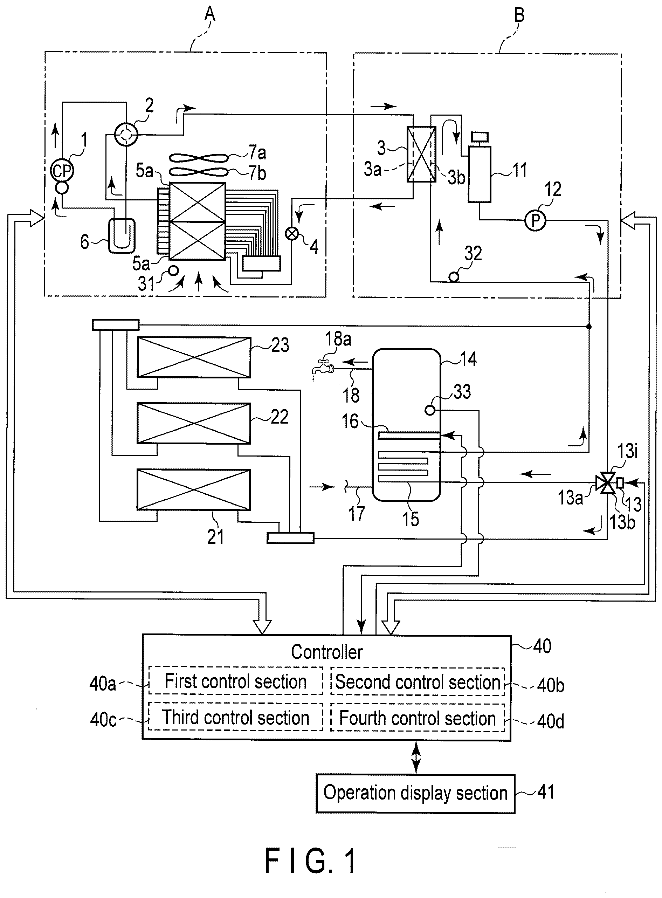

As illustrated in FIG. 1, a discharge port of a compressor 1 is connected by pipe through a four way valve 2 to one end of a refrigerant passage 3a of a water heat exchanger 3. Another end of the refrigerant passage 3a is connected by pipe through an expansion valve 4, which is a pressure reducing unit, to one end of each of air heat exchangers 5a and 5b. Another end of each of the air heat exchangers 5a and 5b is connected by pipe through the four-way valve 2 and an accumulator 6 to an suction port of the compressor 1. These pipe-connections constitute a heat-pump refrigerating cycle.

When heating, as illustrated by arrows, the gas refrigerant is discharged from the compressor 1, passes through the four-way valve 2, and then flows through the refrigerant passage 3a of the water heat exchanger 3. The gas refrigerant flowing through the refrigerant passage 3a will be relieved of heat by the water flowing through the water passage 3b of the water heat exchanger 3, and will be condensed into a liquid refrigerant. The liquid refrigerant flows out of the refrigerant passage 3a of the water heat exchanger 3, is decompressed by the expansion valve 4, and flows into the air heat exchangers 5a and 5b. Then, the liquid refrigerant draws heat from the outdoor air, and evaporates in the air heat exchangers 5a and 5b. As a result, the liquid refrigerant changes into a gas refrigerant. The gas refrigerant flows out of the air heat exchangers 5a and 5b, successively passes through the four-way valve 2 and the accumulator 6, and finally flows into the compressor 1. The refrigerant passage 3a of the water heat exchanger 3 functions as a condenser, and the air heat exchangers 5a and 5b function as an evaporator.

Outdoor fans 7a and 7b are arranged near the air heat exchangers 5a and 5b. The outdoor fans 7a and 7b draw in the outdoor air, which is a source of heat, and cause the drawn-in air to flow through the air heat exchangers 5a and 5b. The outdoor-air-temperature sensor 31 is arranged at the upstream side of an air intake passage produced by the outdoor fans 7a and 7b. The outdoor-air-temperature sensor 31 detects temperature To of the outdoor air drawn in by the outdoor fans 7a and 7b.

The inlet port of the circulating pump 12 is connected by pipe to the outlet of the water passage 3b of the water heat exchanger 3 through the heater 11, which is an auxiliary heat source, and the discharge port of the circulating pump 12 is connected by pipe to the water inlet 13i of an electromagnetic three-way valve 13. And the water inlet of the heat dissipation coil 15 in the hot-water supply tank 14, which is a load side apparatus, is connected by pipe to the water outlet 13a of the three-way valve 13, and the water outlet of the heat dissipation coil 15 is connected by pipe to the inlet of the water passage 3b of the water heat exchanger 3. Furthermore, the water inlet of each of space heating units 21, 22, and 23 is connected by pipe to the water outlet 13b of the three-way valve 13. The water outlet of each of the space heating units 21, 22, and 23 is connected by pipe to the inlet of the water passage 3b of the water heat exchanger 3. The three-way valve 13 has one water inlet 13i and two water outlets 13a and 13b, and selectively establishes either a first channel extending from a water inlet 13i to the water outlet 13a or a second channel extending from a water inlet 13i to the water outlet 13b.

The piping connection between the water heat exchanger 3 and the hot-water supply tank 14 and the piping connection between the water heat exchanger 3 and the space heating units 21, 22, and 23 constitute a hot water circulation cycle. A water-temperature sensor 32 is attached to piping extending from the hot-water supply tank 14 and the space heating units 21, 22, and 23 to the water heat exchanger 3. The water-temperature sensor 32 detects the temperature Tw of the water which flows out of the hot-water supply tank 14 and the space heating units 21, 22, and 23, and returns to the water heat exchanger 3.

The heater 11 heats the water, which flows out of the water heat exchanger 3, during space heating operation if need be, and an electric heater, a gas boiler, etc., may be used for it, for example. The circulating pump 12 sends the water which flows out of the water heat exchanger 3 to the hot-water supply tank 14 and the space heating units 21, 22, and 23, and makes the water which flows out of the hot-water supply tank 14 and the space heating units 21, 22, and 23 flow into the water passage 3b of the water heat exchanger 3. The space heating units 21, 22, and 23 can dissipate heat from the hot water flowing into a space to be climate-controlled. An underfloor heating panel, a forced-air heating coil, a radiator, etc., may be selectively used for each of the space heating units 21, 22, and 23.

The hot-water supply tank 14 contains the heat dissipation coil 15 and the heater (electric heater) 16, heats the water, which flows in from the water inlet pipe 17, by the heat dissipated from the heat dissipation coil 15 and generated by the heater 16, stores the heated water for hot water supply, and leads the stored hot water to the water outlet pipe 18. When the faucet 18a at the tip of the water outlet pipe 18 opens, the hot water in the hot-water supply tank 14 will flow out through the water outlet pipe 18. A water-temperature sensor 33 is arranged in the hot-water supply tank 14. The water-temperature sensor 33 detects the temperature Tt of the hot water in the hot-water supply tank 14.

The compressor 1, the four-way valve 2, the water heat exchanger 3, the expansion valve 4, the air heat exchangers 5a and 5b, the accumulator 6, the outdoor fans 7a and 7b, and the outdoor-air-temperature sensor 31 are accommodated in the outdoor unit A. The water heat exchanger 3, the heater 11, the circulating pump 12, and the water-temperature sensor 32 are accommodated in the water heat exchange unit B.

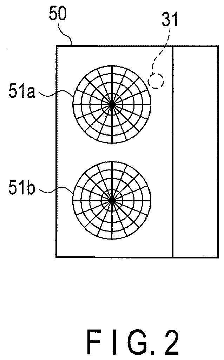

The appearance of the outdoor unit A is illustrated in FIG. 2. The case 50 which constitutes the outdoor unit A has a front face where two air outlets 51a and 51b are vertically aligned. The outdoor fan 7a is arranged inside the upside air injection hole 51a, and the outdoor fan 7b is arranged inside the underside air injection hole 51b. The outdoor-air-temperature sensor 31 is arranged in the intake air passage which the outdoor fan 7a produces in the case 50.

The controller 40 is connected to the outdoor unit A and the water heat exchange unit B. A remote control operation display section 41 for establishing an operating condition, the three-way valve 13, the heater 16 of the hot-water supply tank 14, and the water-temperature sensor 33 are connected to the controller 40. It should be noted that the controller 40 is arranged in a case of the water heat exchange unit B. The operation display section 41 is installed at a hot water supply destination or a space to be climate-controlled.

The controller 40 comprises a first control section 40a, a second control section 40b, a third control section 40c, and a fourth control section 40d for performing its main functions based on the control program stored in the internal memory.

The first control section 40a causes the three-way valve 13 to open its first channel and to close its second channel upon a hot water supply mode having been established by the operation display section 41, thereby establishing a hot water circulation cycle between the water heat exchanger 3 and the hot-water supply tank 14.

The second control section 40b causes the three-way valve 13 to open its second channel and to close its first channel upon a space heating mode having been established by the operation display section 41, thereby establishing a hot water circulation cycle between the water heat exchanger 3 and the space heating units 21, 22, and 23.

Upon establishment of a hot water supply mode, the third control section 40c causes at least one of a heat-pump refrigerating cycle (the compressor 1 and the outdoor fans 7a and 7b) and an auxiliary heat source (the heater 16) to operate according to a combination of the detection temperature To detected by the outdoor-air-temperature sensor 31 and the detection temperature Tw detected by the water-temperature sensor 32, and causes the outdoor fans 7a and 7b and the circulating pump 12 to operate in advance before the commencement of operation of the heat-pump refrigerating cycle or the commencement of operation of the auxiliary heat source. Furthermore, upon establishment of a space heating mode, the third control section 40c causes at least one of a heat-pump refrigerating cycle and an auxiliary heat source (the heater 11) to operate according to a combination of the detection temperature To detected by the outdoor-air-temperature sensor 31 and the detection temperature Tw detected by the water-temperature sensor 32, and causes the outdoor fans 7a and 7b and the circulating pump 12 to operate in advance before the commencement of operation of the heat-pump refrigerating cycle or the commencement of operation of the auxiliary heat source.

When the auxiliary heat source begins to operate under the control of the third control section 40c, the fourth control section 40d keeps the outdoor fans 7a and 7b, which have operated in advance before the commencement of the auxiliary heat source, operating.

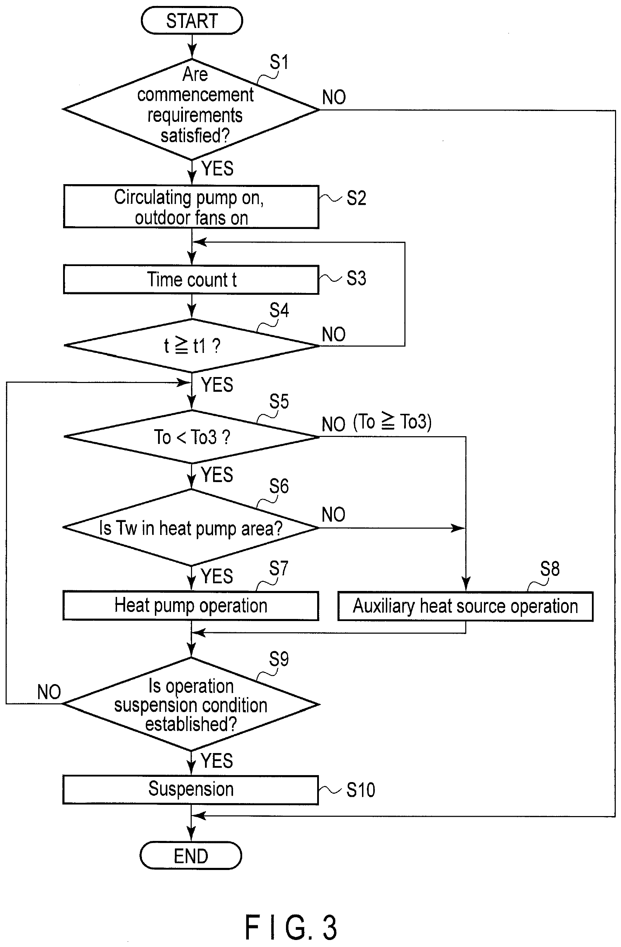

Now, the control which the controller 40 executes will be explained with reference to the flowchart illustrated in FIG. 3.

### [HOT WATER SUPPLY MODE]

The controller 40 monitors whether the requirements for commencement of hot-water supply operation or the requirements for commencement of space heating operation set by a combination of the operation of the operation display section 41, the preset temperature of the operation display section 41, the detection temperature Tt detected by the water-temperature sensor 33, etc., are satisfied or not (Step S1). When the requirements for commencement of hot-water supply operation are satisfied (YES of Step S1), the controller 40 turns on the outdoor fans 7a and 7b and the circulating pump 12 (and causes them to operate) as a preparatory step before actually starting hot-water supply operation (Step S2).

When the circulating pump 12 is turned on, water will circulate between the water heat exchanger 3 and the hot-water supply tank 14, and the temperature Tw of the flowing water will be detected by the water-temperature sensor 32. Since hot water flows beforehand in this way, the stagnation of the water within piping will be eliminated when hot-water supply operation actually starts, and thus the hot water temperature Tw will be measured exactly.

When the outdoor fans 7a and 7b are turned on, the outdoor air will be taken into the outdoor unit A, and the temperature To of the intake air (outdoor-air temperature) will be detected by the outdoor-air-temperature sensor 31. Since the outdoor air flows through, the outdoor-air temperature To can be measured exactly.

The controller 40 starts counting time count t from zero with the operation of the circulating pump 12 and the operation of the outdoor fans 7a and 7b (Step S3), and compares the time count t and set time t1 (for example, 3 minutes) (Step S4).

When the time count t reaches the set time t1 (YES of Step S4), the controller 40 compares the detection temperature To detected by the outdoor-air-temperature sensor 31 with a set value To3 (Step S5).

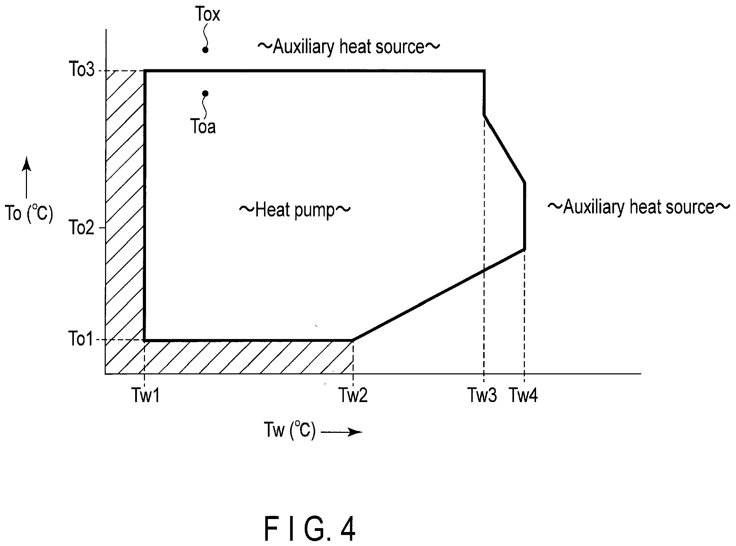

The set value To3 is included in the operation control requirements illustrated in FIG. 4. The operation control requirements are defined in connection with the outdoor-air temperature To and the water temperature Tw, and consist of a heat-pump area where a heat-pump refrigerating cycle operates, and an auxiliary heat source area where an auxiliary heat source, operates. The heat-pump area is equivalent to the use range for compressor protection. Examining the outdoor-air temperature To, what is below the set value To3 is determined as a heat-pump area, and what is greater than or equal to the set value To3 is determined as an auxiliary heat source area. Examining the water temperature Tw, what is below a set variable that changes in the range of the set values Tw2-Tw4 according to the outdoor-air temperature To is determined as the heat-pump area, and what is greater than or equal to the set variable is determined as the auxiliary heat source area.

When the detection temperature To detected by the outdoor-air-temperature sensor 31 is below the set value To3 (YES of Step S5), the controller 40 determines whether or not the detection temperature Tw detected by the water-temperature sensor 32 is inside the heat-pump area (Step S6).

When the detection temperature Tw detected by the water-temperature sensor 32 is inside the heat-pump area (YES of Step S6), the controller 40 executes operation of a heat-pump refrigerating cycle, or what is called a heat-pump operation (Step S7).

That is, in the event of a heat-pump operation, the controller 40 not only causes the compressor 1 to operate but also causes the outdoor fans 7a and 7b to operate. Thereby, the refrigerant passage 3a of the water heat exchanger 3 functions as a condenser, and the air heat exchangers 5a and 5b function as an evaporator. Furthermore, the controller 40 causes the circulating pump 12 to operate. Thereby, water will circulate between the water heat exchanger 3 and the hot-water supply tank 14. The circulating water will be heated up with the pumped heat of a heat-pump refrigerating cycle, and hot water will be accumulated in the hot-water supply tank 14. The heaters 11 and 16 are not operated under the circumstances.

When the detection temperature To detected by the outdoor-air-temperature sensor 31 is greater than or equal to the set value To3 (NO of Step S5), the controller 40 executes auxiliary heat source operation which uses the heater 16 in the hot-water supply tank 14 (Step S8). Moreover, when it is the case that the detection temperature To detected by the outdoor-air-temperature sensor 31 is less than the set value To3 (YES of Step S5), and that the detection temperature Tw detected by the water-temperature sensor 32 is outside the heat-pump area (NO of Step S6), then the controller 40 executes auxiliary heat source operation using the heater 16 (Step S8).

That is, in the event of auxiliary heat source operation, the controller 40 causes the circulating pump 12 and the heater 16 to operate. Therefore, the hot water in the hot-water supply tank 14 will be additionally heated by the heat generated by the heater 16. The heater 11 is not operated under the circumstances.

The controller 40 keeps the outdoor fans 7a and 7b operating in the event of auxiliary heat source operation using the heater 16. Since the outdoor air circulates by the operation of the outdoor fans 7a and 7b, exact detection of the outdoor-air temperature To by the outdoor-air-temperature sensor 31 will be maintained.

With the execution of the heat-pump operation or auxiliary heat source operation, the controller 40 monitors whether or not the operation suspension condition has established according to the operation of the operation display section 41, the set temperature of the operation display section 41, the detection temperature Tt detected by the water-temperature sensor 33, and so forth (Step S9).

When the operation suspension condition is not established (NO of Step S9), the controller 40 returns to the comparison step of Step S5. In contrast, when the operation suspension condition is established (YES of Step S9), the heat-pump operation or auxiliary heat source operation will be suspended (Step S10).

### [SPACE HEATING MODE]

The controller 40 monitors the establishment of operation commencement requirements according to the operation of the operation display section 41, the set temperature of the operation display section 41, the atmospheric temperature (room temperature) of a climate-controlled space, and so forth (Step S1). When operation commencement requirements have been established (YES of Step S1), the controller 40 causes the outdoor fans 7a and 7b and the circulating pump 12 to operate as a preliminary step of actually starting space heating operation (Step S2).

When the circulating pump 12 operates, water circulates through the water heat exchanger 3 and the space heating units 21, 22, and 23. The temperature Tw of the flowing water will be detected by the water-temperature sensor 32. Since water flows, stagnation, etc., of the water within piping will be dissolved, which makes it possible to exactly measure the water temperature Tw.

When the outdoor fans 7a and 7b operate, the outdoor air will be drawn into the outdoor unit A, and the temperature To of the intake air (outdoor air) will be detected by the outdoor-air-temperature sensor 31. Since the outdoor air flows through, it is possible to exactly measure the outdoor-air temperature To.

The controller 40 starts counting time count t from zero as the circulating pump 12 and the outdoor fans 7a and 7b operate (Step S3), and compares the time count t and set time t1 (for example, 3 minutes) (Step S4) .

When the time count t reaches the set time t1 (YES of Step S4), the controller 40 compares the detection temperature To detected by the outdoor-air-temperature sensor 31 with set value To3 (Step S5).

When the detection temperature To detected by the outdoor-air-temperature sensor 31 is below the set value To3 (YES of Step S5), the controller 40 determines whether the detection temperature Tw detected by the water-temperature sensor 32 is inside the heat-pump area (Step S6).

When the detection temperature Tw detected by the water-temperature sensor 32 is inside the heat-pump area (YES of Step S6), the controller 40 executes heat-pump operation (Step S7).

That is, in the event of heat-pump operation, the controller 40 causes the compressor 1 and the outdoor fans 7a and 7b to operate. Thereby, the refrigerant passage 3a of the water heat exchanger 3 functions as a condenser, and the air heat exchangers 5a and 5b function as an evaporator. Furthermore, the controller 40 causes the circulating pump 12 to operate. Thereby, the water circulates between the water heat exchanger 3 and the space heating units 21, 22, and 23. The climate-controlled space having the space heating units 21, 22, and 23 is heated by the pumped heat of a heat-pump refrigerating cycle. The heaters 11 and 16 are not operated under the circumstances.

If the detection temperature To detected by the outdoor-air-temperature sensor 31 is greater than or equal to the set value To3 (NO of Step S5), the controller 40 executes auxiliary heat source operation which uses the heater 11 (Step S8). Moreover, if it is the case that the detection temperature To detected by the outdoor-air-temperature sensor 31 is less than the set value To3 (YES of Step S5), and that the detection temperature Tw detected by the water-temperature sensor 32 is outside the heat-pump area (NO of Step S6), then the controller 40 executes auxiliary heat source operation using the heater 11 (Step S8).

That is, in the event of auxiliary heat source operation, the controller 40 causes the heater 11 and the circulating pump 12 to operate. Thereby, water circulates through the water heat exchanger 3 and the space heating units 21, 22, and 23, and the circulating water will be heated with the heat generated by the heater 11. The compressor 1 and the heater 16 are not made to operate. Therefore, the climate-controlled space having the space heating units 21, 22, and 23 is heated with the heat generated by the heater 11. The heater 16 is not operated under the circumstances.

The controller 40 keeps the outdoor fans 7a and 7b operating in the event of auxiliary heat source operation using the heater 11. Since the outdoor air circulates by the operation of the outdoor fans 7a and 7b, exact detection of the outdoor-air temperature To by the outdoor-air-temperature sensor 31 will be maintained.

With the execution of the heat-pump operation or auxiliary heat source operation, the controller 40 monitors whether or not the operation suspension condition has established according to the operation of the operation display section 41, the set temperature of the operation display section 41, the atmospheric temperature of the climate-controlled space (room temperature), and so forth (Step S9).

If the operation suspension condition is not established (NO of Step S9), the controller 40 returns to the comparison step of Step S5. In contrast, if the operation suspension condition is established (YES of Step S9), the heat-pump operation or auxiliary heat source operation will be suspended (Step S10).

### [SUMMARY]

Since the outdoor fans 7a and 7b are made to operate and the outdoor air is made to circulate before the heat-pump operation or auxiliary heat source operation is made to start, as mentioned above, the outdoor-air temperature To will be exactly measured, even if direct sunlight is striking upon the case 50 of the outdoor unit A or the case 50 is surrounded with a wall etc.

For example, if the outdoor fans 7a and 7b should not be operated in advance of the commencement of full-scale operation even though the operation control requirements of FIG. 4 are satisfied, the detection temperature detected by the outdoor-air-temperature sensor 31 may exhibit a value Tox which is higher than the set value To3 because of a bad influence of direct sunlight, and auxiliary heat source operation with low performance may be executed using the heater 11. On the other hand, when the outdoor fans 7a and 7b are made to operate in advance of the commencement of full-scale operation, the detection temperature detected by the outdoor-air-temperature sensor 31 will exhibit a value (appropriate value) Toa which is lower than the set value To3 irrespective of the adverse effect of direct sunlight. Therefore, the suitable operation control of a heat-pump refrigerating cycle will be achieved, resulting in improvement in not only the operating efficiency of the heat-pump refrigerating cycle but also the energy-saving performance.

Furthermore, since the circulating pump 12 is made to operate in advance in order to make hot water flow through a hot water circulation cycle before starting heat-pump operation or auxiliary heat source operation, the stagnation etc of the water within piping will be dissolved, which makes it possible to exactly measure the hot water temperature Tw.

Since both the outdoor-air temperature To and the hot water temperature Tw can be measured exactly, the time required for determination of an operating range will be reduced. That is, the response of operation control will be improved and wasteful stand-by time will be reduced. From this point of view, it is apparent that a suitable operation of the heat-pump refrigerating cycle will be achieved.

Furthermore, in the case of executing auxiliary heat source operation using the heater 11 or the heater 16, operation of the outdoor fans 7a and 7b is unnecessary from the viewpoint of obtaining a sufficient amount of heat. Nevertheless, the outdoor fans 7a and 7b are deliberately operated during auxiliary heat source operation in the present embodiment, because of which exact measurement of the outdoor-air temperature To will be achieved during the auxiliary heat source operation. Since it requires a lot of time that the actual outdoor-air temperature To is transmitted from an auxiliary heat source area to a heat-pump area if it is calm outside or if the case 50 of the outdoor unit A is installed in a place which is not exposed to wind, it will take time for the outdoor-air-temperature sensor 31 to detect the actual outdoor-air temperature To. Such a delay in detection of actual temperature will be eliminated by operation of the outdoor fans 7a and 7b.

Moreover, the heat-pump area, which is included in the operation control requirements, is determined with consideration given to the capacity, performance, etc. of the compressor 1. Therefore, if the compressor 1 is operated in a range which deviates from the proper heat-pump area, the compressor 1 may be subjected to overload operation, which will have an adverse effect on the mechanical life and reliability of the compressor 1. In contrast, in the present embodiment, both the outdoor-air temperature To and the hot water temperature Tw will be measured exactly, so that such a malfunction caused by overload operation will be surely prevented.

### (2) Now, a second embodiment will be explained.

The fourth control section 40d of the controller 40 executes an intermittent operation (an interval operation) in which the outdoor fans 7a and 7b are made to alternately operate every fixed time for a predetermined period of time when an auxiliary heat source is operated under the control of the third control section 40c.

Because of such an intermittent operation (an interval operation), the outdoor-air temperature To can be exactly measured even while the auxiliary heat source is being operated. Therefore, it is possible to suppress power consumption as much as possible, and to improve the energy-saving performance.

The rest of the configuration and control is the same as the first embodiment. Therefore, their explanation will be omitted.

### (3) Finally, a third embodiment will be explained.

In a hot water supply mode or in a space heating mode, the third control section 40c of the controller 40 selectively executes the heat-pump operation or auxiliary heat source operation according to the detection temperature To detected by the outdoor-air-temperature sensor 31 and the detection temperature Tw detected by the water-temperature sensor 32, and causes the circulating pump 12 and the outdoor fan 7a to operate in advance, without operating the outdoor fan 7b, before the commencement of operation of the heat-pump refrigerating cycle or the commencement of operation of the auxiliary heat source.

The fourth control section 40d of the controller 40 causes only the outdoor fan 7a out of the outdoor fans 7a and 7b to operate when the auxiliary heat source operation is executed under the control of the third control section 40c.

Since the outdoor fan 7a which is near the outdoor-air-temperature sensor 31 is made to singly operate, not only the outdoor-air temperature To will be exactly measured but also the power consumption required for operating the outdoor fans will be reduced, resulting in improvement in energy-saving performance.

The rest of the configuration and control is the same as the first embodiment. Therefore, their explanation will be omitted.

While certain embodiments have been described, these embodiments have been presented by way of example only, and are not intended to limit the scope of the invention.

## Claims

1. A heat-pump heat source apparatus comprising:
a heat-pump refrigerating cycle including a compressor (1), a water heat exchanger (3), a pressure reducing unit (4), and at least one air heat exchanger (5a);
a first outdoor fan (7a) configured to make outdoor air flow through the air heat exchanger (5a);
an outdoor-air-temperature sensor (31) configured to detect a temperature (To) of the outdoor air drawn in by the first outdoor fan (7a);
a circulating pump (12) configured to send the water flowing out of the water heat exchanger (3) to a load side apparatus, and to make the water flowing out of the load side apparatus flow into the water heat exchanger (3);
a water-temperature sensor (32) configured to detect a temperature (Tw) of the water flowing into the water heat exchanger (3); and
a controller (40); **characterized in that** it comprises an auxiliary heat source configured to heat the water flowing out of the water heat exchanger (3); and **in that** the heat-pump heat source apparatus is configured to heat water flowing through the water heat exchanger (3) with a refrigerant discharged from the compressor (1) and **in that** the controller (40) is configured to selectively execute operation of the heat-pump refrigerating cycle and operation of the auxiliary heat source according to the detection temperature (To) detected by the outdoor-air-temperature sensor (31) and the detection temperature (Tw) detected by the water-temperature sensor (32), and cause the first outdoor fan (7a) and the circulating pump (12) to operate in advance before the heat-pump refrigerating cycle or the auxiliary heat source begins to operate.

2. The apparatus of claim 1, **characterized in that**
the load side apparatus comprises a hot-water supply tank (14) containing the hot water for hot water supply, and space heating units (21, 22 and 23) configured to emit heat from the drawn-in hot water to a space to be climate-controlled;
the auxiliary heat source comprises a heater (11) configured to heat the water flowing out of the water heat exchanger (3), and a heater (16) configured to heat the water in the hot-water supply tank (14); and
the controller is configured to establishes a hot water circulation cycle between the water heat exchanger (3) and the hot-water supply tank (14) during hot water supply operation, and establishes a hot water circulation cycle between the water heat exchanger (3) and the space heating units (21, 22 and 23) during space heating operation.

3. The apparatus of claim 2, **characterized by** further comprising:
a second outdoor fan (7b) configured to make the outdoor air flow through the air heat exchanger (5a) in cooperation with the first outdoor fan (7a).

4. The apparatus of claim 3, **characterized in that** the controller (40) is configured to causes the first and second outdoor fans (7a and 7b) to intermittently operate upon causing the auxiliary heat source to operate.

5. The apparatus of claim 3, **characterized in that**:
the outdoor-air-temperature sensor (31) is configured to detects the temperature (To) of the outdoor air drawn in by the first and second outdoor fans (7a and 7b), and
the controller (40) is configured to selectively executes operation of the heat-pump refrigerating cycle and operation of the auxiliary heat source according to the detection temperature (To) detected by the outdoor-air-temperature sensor (31) and the detection temperature (Tw) detected by the water-temperature sensor (32), and causes the circulating pump (12) and only the first outdoor fan (7a) out of the first and second outdoor fans (7a and 7b) to operate in advance before the heat-pump refrigerating cycle or the auxiliary heat source begins to operate.

6. The apparatus of claim 5, **characterized in that** the controller (40) is configured to causes only the first outdoor fan (7a) out of the first and second outdoor fans (7a and 7b) to operate upon executing the operation of the auxiliary heat source.

## Patentansprüche

1. Wärmepumpe-Wärmequelle-Vorrichtung mit:
einem Wärmepumpen-Kühlkreislauf mit einem Kompressor (1), einem Wasserwärmetauscher (3), einer Druckreduziereinheit (4), und zumindest einem Luftwärmetauscher (5a);
einem ersten Außen-Lüfter (7a), der eingerichtet ist, Außenluft durch den Luftwärmetauscher (5a) strömen zu lassen,
einem Außenlufttemperatur-Sensor (31), der eingerichtet ist, eine Temperatur (To) der von dem ersten Außen-Lüfter (7a) angesaugten Außenluft festzustellen;
einer Zirkulationspumpe (12), die eingerichtet ist, das aus dem Wasserwärmetauscher (3) ausströmende Wasser zu einer Lastseitenvorrichtung zu leiten und das aus der Lastseitenvorrichtung ausströmende Wasser in den Wasserwärmetauscher (3) strömen zu lassen;
einem Wassertemperatur-Sensor (32), der eingerichtet ist, eine Temperatur (Tw) des in den Wasserwärmetauscher (3) fließenden Wassers festzustellen; und
einem Steuergerät (40);
**dadurch gekennzeichnet, dass** sie eine zusätzliche Wärmequelle aufweist, die eingerichtet ist, das aus dem Wasserwärmetauscher (3) ausströmende Wasser zu erwärmen; und dass die Wärmepumpe-Wärmequelle-Vorrichtung eingerichtet ist, durch den Wasserwärmetauscher (3) strömendes Wasser mit einem von dem Kompressor (1) abgelassenen Kältemittel zu erwärmen und dass das Steuergerät (40) eingerichtet ist,
wahlweise den Betrieb des Wärmepumpen-Kühlkreislaufes und den Betrieb der zusätzlichen Wärmequelle entsprechend der von dem Außenlufttemperatur-Sensor (31) festgestellten Feststelltemperatur (To) und der von dem Wassertemperatur-Sensor (32) festgestellten Feststelltemperatur (Tw) auszuführen,
und den ersten Außen-Lüfter (7a) und die Zirkulationspumpe (12) im Voraus zu veranlassen zu arbeiten, bevor der Wärmepumpen-Kühlkreislauf oder die zusätzliche Wärmequelle zu arbeiten beginnt.

2. Vorrichtung nach Anspruch 1, **dadurch gekennzeichnet, dass** die Lastseitenvorrichtung einen Warmwasser für Warmwasserversorgung beinhaltenden Warmwasser-Vorratsbehälter (14) und Raumheizungseinheiten (21, 22 und 23) aufweist, die eingerichtet sind, Wärme von dem eingezogenen Warmwasser an einen zu klimatisierenden Raum abzugeben;
die zusätzliche Wärmequelle eine Heizung (11) aufweist, die eingerichtet ist, das aus dem Wasserwärmetauscher (3) ausströmende Wasser zu erwärmen, und eine Heizung (16), die eingerichtet ist, das Wasser in dem Warmwasser-Vorratsbehälter (14) zu erwärmen; und
das Steuergerät eingerichtet ist, einen Warmwasser-Zirkulationskreis zwischen dem Wasserwärmetauscher (3) und dem Warmwasser-Vorratsbehälter (14) während des Warmwasser-Versorgungsbetriebes zu schaffen, und einen Warmwasser-Zirkulationskreis zwischen dem Wasserwärmetauscher (3) und den Raumheizungseinheiten (21, 22 und 23) während des Raumheizungsbetriebes zu schaffen.

3. Vorrichtung nach Anspruch 2, **dadurch gekennzeichnet, dass** sie zudem einen zweiten Außen-Lüfter (7b) aufweist, der eingerichtet ist, in Zusammenarbeit mit dem ersten Außen-Lüfter (7a) Außenluft durch den Luftwärmetauscher (5a) strömen zu lassen.

4. Vorrichtung nach Anspruch 3, **dadurch gekennzeichnet, dass** das Steuergerät (40) eingerichtet ist, beim Betrieb der zusätzlichen Wärmequelle, den ersten und zweiten Außen-Lüfter (7a und 7b) zu veranlassen, intermittierend zu arbeiten.

5. Vorrichtung nach Anspruch 3, **dadurch gekennzeichnet, dass** der Außenlufttemperatur-Sensor (31) eingerichtet ist, die Temperatur (To) von der von dem ersten und zweiten Außen-Lüfter (7a und 7b) eingesaugten Außenluft festzustellen, und
das Steuergerät (40) eingerichtet ist, wahlweise den Betrieb des Wärmepumpen-Kühlkreislaufes und den Betrieb der zusätzlichen Wärmequelle entsprechend der von dem Außenlufttemperatur-Sensor (31) festgestellten Feststelltemperatur (To) und der von dem Wassertemperatur-Sensor (32) festgestellten Feststelltemperatur (Tw) auszuführen, und die Zirkulationspumpe (12) und nur den ersten Außen-Lüfter (7a) von dem ersten und zweiten Außen-Lüfter (7a und 7b) im Voraus zu veranlassen zu arbeiten, bevor der Wärmepumpen-Kühlkreislauf oder die zusätzliche Wärmequelle zu arbeiten beginnt.

6. Vorrichtung nach Anspruch 5, **dadurch gekennzeichnet, dass** das Steuergerät (40) eingerichtet ist, auf Ausführen des Arbeitens der zusätzlichen Wärmequelle, nur den ersten Außen-Lüfter (7a) von dem ersten und zweiten Außen-Lüfter (7a und 7b) zu veranlassen zu arbeiten.

## Revendications

1. Appareil de source de chaleur de pompe à chaleur comprenant :
un cycle de réfrigération de pompe à chaleur comprenant un compresseur (1), un échangeur thermique à eau (3), une unité de réduction de pression (4) et au moins un échangeur thermique à air (5a) ;
un premier ventilateur extérieur (7a) conçu pour créer un flux d'air extérieur à travers l'échangeur thermique à air (5a) ;
un capteur de température d'air extérieur (31) conçu pour détecter une température (To) de l'air extérieur aspiré par le premier ventilateur extérieur (7a) ;
une pompe de circulation (12) conçue pour envoyer l'eau s'écoulant hors de l'échangeur thermique à eau (3) vers un appareil côté charge et pour faire en sorte que l'eau s'écoule hors de l'appareil côté charge vers l'échangeur thermique à eau (3) ;
un capteur de température d'eau (32) conçu pour détecter une température (Tw) de l'eau s'écoulant vers l'échangeur thermique à eau (3) ; et
un contrôleur (40) ;
**caractérisé en ce qu'**il comprend une source de chaleur auxiliaire conçue pour chauffer l'eau s'écoulant hors de l'échangeur thermique à eau (3) ;
et **en ce que** l'appareil de source de chaleur de pompe à chaleur est conçu pour chauffer l'eau s'écoulant à travers l'échangeur thermique à eau (3) avec un réfrigérant évacué hors du compresseur (1) et **en ce que** le contrôleur (40) est conçu pour exécuter de manière sélective le fonctionnement du cycle de réfrigération de pompe à chaleur et le fonctionnement de la source de chaleur auxiliaire selon la température de détection (To) détectée par le capteur de température d'air extérieur (31) et la température de détection (Tw) détectée par le capteur de température d'eau (32) et pour faire en sorte que le premier ventilateur extérieur (7a) et la pompe de circulation (12) fonctionnent en avance avant que le cycle de réfrigération de pompe à chaleur ou la source de chaleur auxiliaire commence à fonctionner.

2. Appareil selon la revendication 1, **caractérisé en ce que**
l'appareil côté charge comprend un réservoir d'alimentation en eau chaude (14) contenant l'eau chaude pour l'alimentation en eau chaude, et des unités de chauffage d'espace (21, 22 et 23) conçues pour émettre la chaleur de l'eau chaude vers un espace à climatiser ; la source de chaleur auxiliaire comprend un radiateur (11) conçu pour chauffer l'eau s'écoulant hors de l'échangeur thermique à eau (3) et un radiateur (16) conçu l'eau dans le réservoir d'alimentation en eau chaude (14) ; et
le contrôleur est conçu pour établir un cycle de circulation d'eau chaude entre l'échangeur thermique à eau (3) et le réservoir d'alimentation en eau chaude (14) pendant le fonctionnement de l'alimentation en eau chaude et pour établir un cycle de circulation d'eau chaude entre l'échangeur thermique à eau (3) et les unités de chauffage d'espace (21, 22 et 23) pendant le fonctionnement du chauffage d'espace.

3. Appareil selon la revendication 2, **caractérisé en ce qu'**il comprend en outre :
un deuxième ventilateur extérieur (7b) conçu pour créer le flux d'air extérieur à travers l'échangeur thermique à air (5a) en coopération avec le premier ventilateur extérieur (7a).

4. Appareil selon la revendication 3, **caractérisé en ce que** le contrôleur (40) est conçu pour faire en sorte que les premier et deuxième ventilateurs extérieurs (7a et 7b) fonctionnent par intermittence lorsque la source de chaleur auxiliaire fonctionne.

5. Appareil selon la revendication 3, **caractérisé en ce que** :
le capteur de température d'air extérieur (31) est conçu pour détecter la température (To) de l'air extérieur aspiré par les premier et deuxième ventilateurs extérieurs (7a et 7b) et
le contrôleur (40) est conçu pour exécuter de manière sélective le fonctionnement du cycle de réfrigération de la pompe à chaleur et le fonctionnement de la source de chaleur auxiliaire selon la température de détection (To) détectée par le capteur de température d'air extérieur (31) et la température de détection (Tw) détectée par le capteur de température d'eau (32) et pour faire en sorte que la pompe de circulation (12) et seul le premier ventilateur extérieur (7a) parmi les premier et deuxième ventilateurs extérieurs (7a et 7b) fonctionnent en avance avant que le cycle de réfrigération de la pompe à chaleur ou la source de chaleur auxiliaire commence à fonctionner.

6. Appareil selon la revendication 5, **caractérisé en ce que** le contrôleur (40) est conçu pour faire en sortie que seul le premier ventilateur extérieur (7a) parmi les premier et deuxième ventilateurs extérieurs (7a et 7b) fonctionne lors de l'exécution du fonctionnement de la source de chaleur auxiliaire.
